(19) Europäisches Patentamt
European Patent Office
Office européen des brevets

(11) Publication number: 0 052 053 A1

# (12) EUROPEAN PATENT APPLICATION

(21) Application number: 81401758.8

(22) Date of filing: 30.10.81

(51) Int. Cl.³: G 01 V 3/16, G 01 V 3/165

(30) Priority: 07.11.80 US 204940

(43) Date of publication of application: 19.05.82 Bulletin 82/20

(84) Designated Contracting States: AT BE CH DE FR GB IT LI LU NL SE

(71) Applicant: Northwest Energy Company, 315 East Second Street South, Salt Lake City Utah (US)

(72) Inventor: Stamm, Michael Edward, 8107 South Finlandia Way, Sandy Utah (US)

(74) Representative: Maiffret, Bernard, Law Offices of William J. Rezac 49, avenue Franklin D. Roosevelt, F-75008 Paris (FR)

(54) **Process and apparatus for airborne surveys of cathodic protection of underground pipelines.**

(57) A process and apparatus using airborne equipment for monitoring the current level in a pipeline including the steps of:

(a) Flying an aircraft bearing at least one AC magnetometer above an underground pipeline;

(b) Detecting the magnetic field created by a DC current impressed on said pipeline;

(c) Filtering out extraneous signals other than those created by the magnetic field of the pipeline;

(d) Detecting the linear position of the magnetometer with respect to said pipeline as the aircraft is flown; and

(e) Producing a discernible record of the magnitude of the magnetic field in relation to the linear position of the magnetometer with respect to the pipeline.

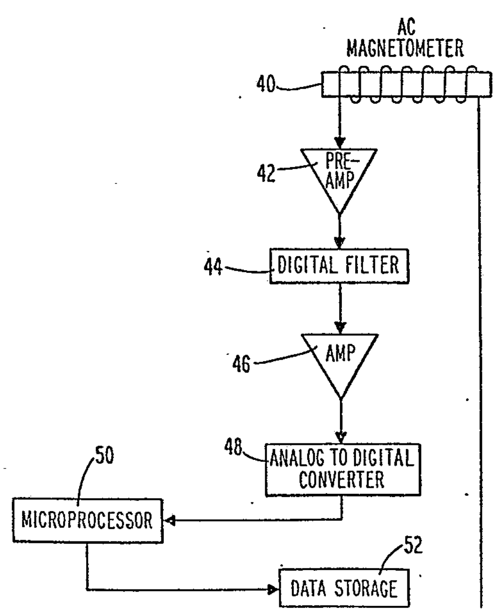


EP 0 052 053 A1



COMPLETE DOCUMENT

0052053

## Background of the Invention.

(a) Field of the Invention. The invention relates to an apparatus and process for performing airborne surveying of the protective DC current in underground pipelines.

(b) Prior Art. There are hundreds of thousands of kilometers of underground pipelines in the United States, and at least tens of thousands of kilometers of underground pipelines in foreign countries. These pipelines are used primarily to transport oil, oil products and gas, but they are also used for other products, such as carbon dioxide and coal slurries. These pipelines are typically buried 90 centimeters or more below the ground in order to protect them from the elements, from surface tampering and from disruption such as farmers plowing in fields with buried pipelines. The pipelines are subject to corrosion, and this is a serious concern, so that extensive steps are taken to prevent corrosion. One of these steps is to coat the underground pipes, which are typically made of steel, with protective coatings of coal tar, Mylar-epoxy or other coatings which act as an electrical insulation of the pipe for a DC current which is passed through pipes to protect the pipes from corrosion.

This cathodic protection of pipelines is achieved by impressing on the pipe a DC current of approximately 50 milliamps per square meter of surface area of the pipe. In order to maintain this current, it is commonplace to provide rectifiers along the length of the pipeline, the distances between rectifiers being as little as 300 meters and as much as 80 kilometers, depending on the soil resistivity, its corrosive or non-corrosive nature, the size of the pipeline, the quality of coating and other factors.

The precise current level used to protect the pipe is determined by the pipe material and diameter and the quality of the coating; a poorer coating needs a higher current level. State and Federal laws require each underground pipeline to be surveyed on a periodic basis, usually at least once per month at the rectifier and about once per year at each test lead, test leads commonly being one mile apart, in order to confirm that the proper minimum protective level of current is being maintained, or to determine those areas where it is not maintained so that corrective measures can be taken. Pipeline companies typically survey on "close interval" (less than 1.6 km spacing) every five to seven years.

The prior art utilizes one of two techniques for "close interval" monitoring of the current in a pipeline. The first method involves the use of one or more people who walk on the pipeline right-of-way, with two or more probes, each at least 1.2 meter in length. The probes are either like walking sticks or are multi-probes mounted on a wheel. The probes are electrodes, which are connected to a high impedance potentiometer, which is balanced to measure the current in the pipe as the individuals walk along the pipeline. In order for this technique to function, the probes must pierce the coating of the pipe in order to touch the pipe. This damages the coating, and thereby substantially increases the prospect of corrosion, a self-defeating approach. The typical cost for performing such a monitoring survey at mid-1980 was approximately $250 to $280 per km. In addition, it is obviously a slow and tedious process, requiring many days to monitor a nominal pipeline distance of, say, several hundred kilometers.

The foregoing prior art technique experiences many major electrode-soil interface problems. For example, if the probe is penetrating a gravel type of soil and hits rocks or weeds, false readings result. The readings are inherently very noisy with extraneous noise, and are therefore difficult to read accurately. In addition, because of the time and expense involved, readings are only usually done every 300 meters or so. Therefore, if a probe registers a sub-marginal current in a section of pipe, the only way in which the problem can be located is by further monitoring to pinpoint the distance involved, another tedious and expensive process.

The other technique for monitoring pipe protective current is to have test leads welded to the pipe when the pipe is installed, with the test leads extending through a protective pipe to the surface. For example, test leads could be welded to an iron pipe, extending up to the ground, so that the test leads can be connected to a balanced shunt circuit to determine the current flow between the test leads. This technique has many shortcomings. First of all, it is too expensive to have test leads located much closer together than one mile, so it only gives an approximate distance for a problem. The current flows measured are highly dependent on the quality of the welds of the leads to the pipe and the welds deteriorate in time, so that a small change in the weld-pipe interface resistance will produce a substantial inaccuracy in the reading.

The lowest level of current which can accurately be measured by the prior art techniques is approximately 800 milliamps, which corresponds to a distance between probes of about 600 meters, so that problems can only be determined within limits of 600 meters. This is obviously not ideal.

It is known that the current in underground ferrous pipes creates a magnet field, and attempts have been made to measure that magnetic field. The field is a DC magnetic field, resulting from the DC current which passes through the pipe. These experimental approaches have not been successful. The problem, among others, has been the sensitivity of the DC magnetometers, which have been used to measure the DC magnetic fields, to false readings resulting from other sources of DC magnetic fields. Thus, the very sensitive DC magnetometers will give false readings from nearby railroad trains, iron deposits, proximate pipelines and the like.

In the prior art, DC magnetometers have been used to measure the presence of ore deposits or for detecting submarines, for example. There is commercial DC magnetometer equipment available for detecting submarines, but not capable of measuring its characteristics, for example determining its depth, size or the like. Therefore, the use of this technique is not applicable to the detection of adequate levels of protective currents in pipes.

United States Patents Numbers 3,490,032, 3,604,660, 3,663,953 and 3,808,519 show various devices using DC magnetometers for the detection of sub-surface metallic deposits. Although somewhat similar in concept to the process and apparatus of this invention, these apparatus would not be satisfactory for commercial use because they would not provide an accurate and economical measurement of the current flowing within sub-surface pipes.

## Brief Summary of the Invention.

The invention is applied to pipelines to which is impressed a DC current which pulsates at 120 Hz, and is used to prevent corrosion. The invention includes an apparatus for the accurate detection of a magnetic field created by the passage of direct current in a ferrous object, such as a pipeline, located below the surface of the earth. The apparatus is mounted for use on an aircraft, such as a helicopter, and includes at least one AC magnetometer, filter means operatively associated with the magnetometer to filter out magnetic fields caused by DC voltages of magnitudes different from the one to be measured, at least one magnetic field sensor operatively associated with the magnetometer, means mounting the sensor exterior to an aircraft, and means to display or record the output of the magnetometer.

The invention also includes a process for detecting the existence of DC current and measuring its magnitude in an underground pipeline, by the utilization of an AC magnetometer substantially as described above.

The apparatus and process of this invention overcome the numerous shortcomings of the prior art by providing an airborne apparatus and process capable of measuring accurately the presence, location and magnitude of a DC current in an underground pipeline.

It is desirable for the invention to include three magnetometers, spaced from each other to provide plural readings of the magnetic fields being sensed, to provide a sensing accuracy which can eliminate the effects of, for example, a parallel, proximate pipeline. This is important because pipelines frequently are present in parallel pairs.

In the practice of the process of this invention it is desirable to use a radar altimeter in conjunction with the magnetometers to permit measurements of the depth of ground cover above the pipeline being inspected contemporaneous with the measurement of its DC current.

The process and apparatus of this invention are able to locate and measure the protective currents in those pipeline segments which are located underwater, which is not possible with prior art techniques.

This invention produces two other benefits, because of the relatively precise nature of the information which it generates. First of all, by evaluating, from time to time over a period of time, the current flow in a given section of pipeline having a given type of coating, accurate data can be developed from which to evaluate the performance of the coating and thereby to aid in developing superior and more reliable coatings. Secondly, it is known that there are oil and gas "pirates," who will pirate oil or gas from an underground pipeline without payment. Such an underground connection produces a sharp current drop at the point of connection. This drop can be seen on a read-out of the data developed by this invention and used to assist in detecting and perhaps also discouraging such piracy.

Objects of the Invention.

It is therefore an object of this invention to provide an apparatus and process for easily, efficiently, speedily and accurately detecting, measuring and locating the magnitude of the DC current being passed through an underground pipeline.

Another object of this invention is to provide a magnetometer apparatus capable of accurately and speedily measuring the DC current flowing in each of two proximate, parallel pipelines.

Yet another object of this invention is to provide an apparatus and process to measure the ground cover over a pipeline quickly and accurately and to do so contemporaneous with measuring the protective current in the pipeline.

A concomitant object of this invention is to locate under water pipelines and to measure the protective current therein.

These and other objects will be apparent when viewed in light of the detailed description of the invention set forth below and the drawings.

## Description of the Drawings.

Figure 1 is a schematic representation of a helicopter embodying the apparatus of this invention; and

Figure 2 is a flow diagram showing the operation of the apparatus of this invention.

## Detailed Description of the Invention.

Viewing Figure 1, the invention is preferably utilized in connection with a helicopter, as opposed to a standard take-off and landing aircraft. Thus, a helicopter 10 is provided with a suitable mounting device, generally designated by numeral 12, below its body. Mounting device 12 operatively supports three booms, respectively designated 14, 16 and 18.

The helicopter 10 is desirably a Bell Jet Ranger II helicopter, which is desired for its stability and reliability. The helicopter is selected so that it will travel at an elevation which is desirably approximately thirty meters above ground level, at a speed which is desirably about eighty kilometers per hour. A helicopter is preferred to a conventional standard take-off and landing aircraft because the helicopter turns corners better and also flies much better at low speeds and altitudes, such as used in the process of this invention.

Platform 12 may be a commercially available Chadwick carrier, which is commonly used for mounting luggage below a helicopter fuselage.

The booms, 14, 16 and 18, are preferably made of graphite or other suitable non-ferrous mateial to possess the desirable qualities of strength, rigidity, lightness of weight and non-ferrous characteristics. The booms may be rigidly mounted to carrier 12 or to the undercarriage of the helicopter.

In the embodiment illustrated, which is the preferred embodiment, each of the booms has mounted at its end a sensor, respectively designated 20, 22 and 24. The booms are located at right-angles to each other, boom 16 being located in line with the longitudinal axis of helicopter 10, and booms 14 and 18 being perpendicular thereto. At the remote end of each of the three booms is located a sensor, respectively designated 20, 22 and 24, the purpose of which is to sense the magnetic field created by the current in the pipe being measured.

Each of the booms is approximately forty meters in length. Although the invention is described as having three booms, which is the minimum number desired in order to provide for maximum sensitivity and accuracy of the measurement of cathodic currents in underground pipelines, it is within the purview of this invention to have fewer or more than three booms. Three or more booms are most necessary if parallel, proximate pipelines are being surveyed, as is frequently the case, to provide sufficient information to be able to differentiate between the currents in the two individual pipelines.

In determining whether or not to use a single sensor or plural sensors, another factor to be taken into consideration is the effect of the wind. If the effect of the wind is not to be significant, and only one pipeline is to be measured (rather than proximate parallel pipelines) one sensor would be satisfactory. However, realistically, it is desirable to have at least two sensors and preferable to have three.

The three sensors, 20, 22 and 24, are identical AC magnetometers, commonly known as surge coils. The cores of the magnetometers are formed of mu-metal alloy, of a type which is well-known and is commonly used for magnetic cores. Each core is cylindrical in shape, having a length of 2.5 cm. and a diameter of 1.25 centimeter. Each core is wound with 300,000 turns of size 42 copper wire, in order to produce the desired sensitivity, although it will be appreciated that the precise wire size, core size, number of turns and similar variables can be reasonably varied without departing from the spirit or the scope of this invention.

When sensing the magnetic field being detected, it is desirable to break up the magnetic field vector into x, y and z axis coordinates, so that each sensor produces signals which are broken down into the three components of each magnetic field vector. The purpose of this is to allow adjustments to be made for movement of the aircraft bearing the sensors in the x, y and z directions in order to compensate for the effect of wind. If wind is or may be a factor, the use of the three coordinates is necessary. This three-axis information also facilitates the determination of the influence of magnetic fields other than the one being measured as when there are parallel, proximate pipelines.

It is to be noted that, as far as is currently known, AC-magnetometers are not commercially made, so that the magnetometers must be specially constructed for the purposes of this invention. However, this is within the ability of the skilled artisan.

The current which passes in underground pipes is typically 120 cycle, rectified pulsating DC current. This current creates a 120 cycle magnetic field, which is to be detected by the apparatus and process of this invention. The magnetic field of the earth is approximately 1,000 to 10,000 times larger than the magnetic field which is to be detected by the process and apparatus of this invention. The AC-magnetometers are particularly suitable for this purpose, because DC-magnetometers are so sensitive that false readings are given because of the effect of other magnetic phenomena around the pipeline being measured. The AC-magnetometer can be adapted for the purposes of this invention by the use of a filter, which is preferably a digital filter, for the purpose of screening out all extraneous signals, so that the AC-magnetometer can be made sensitive only to the particular magnetic field created by the 120 cycle current in the ferrous pipeline being measured. This cannot be done with a DC magnetometer while maintaining the sensitivity requisite to clear, accurate, meaningful readings.

It is to be understood that, to the extent that the particular magnitude and waveform of the current passing through the pipe being measured varies from 120 cycle rectified pulsating DC waveform, the digital filter can be modified so that the process and apparatus of the invention will measure only the characteristics of the DC current in the pipelines and extraneous signals will be filtered out.

As illustrated in Figure 2, an AC-magnetometer is designated by numeral 40, and the magnetometer output is connected to a pre-amplifier 42, for the purpose of amplifying the output signal of the magnetometer and assuring that there is an adequate signal corresponding to any relatively weak signals which are being sensed by the magnetometer. The pre-amplifier 42 is a standard audio pre-amplifier, of a type which is used for military purposes. A suitable, commercially-available pre-amplifier is an RCA CA003 integrated circuit unit.

If plural magnetometers are used, the filter would operate on the output of each magnetometer.

The output signal for each magnetometer, after having been amplified, is passed through a digital filter, which is set to filter out all signals other than those corresponding to an electric field produced by a rectified, pulsating DC current of 120 cycles. Suitable digital filters are commercially available, but in the practise of the invention it is often preferred to save money by constructing the digital filter independently.

Each filtered signal is then passed through an amplifier 46 to amplify the magnitude of the signal and make it more easy to handle by the microprocessor 50. The output of the amplifier 46 is fed into a analog to digital converter 48, which converts the AC output signal of the amplifier to a digital signal, to facilitate handling by the microprocessor.

The microprocessor 50 includes a multiplexer, which is commercially available from DATEL, and the purpose of this is to separate and multiplex each of the nine signals produced by the three magnetometers, 20, 22 and 24. These signals represent the x, y and z axis coordinates of each of the three magnetometer signals. As discussed below, an altimeter signal, position indicator and clock produce a single output which identifies the particular point in the pipeline at which the magnitude and direction of the current are being measured.

The microprocessor 50 is a small computer which is provided with the signals which represent the components of the magnetic field being measured and coordinates them with the time and position signals, so that the microprocessor output will show the magnitude of the magnetic field of the pipeline being measured or the current flow in the pipeline which created the magnetic field plotted against the coordinate of time or distance. Thus, for example, the x-axis coordinate of the output can be distance (meters along the pipeline from a reference point) and the y-axis coordinate can be current in milliamps, for example, to give the current at any point along the pipeline. In this way the resulting output can be read and the areas noted along the length of the pipeline where current flow is beneath the minimum level necessary to protect the pipe. With the defective pipe segments thus pinpointed, a repair crew can be sent out to dig down to the pipe and allow the defective coating to be repaired.

If desired, an alarm can be connected to the microprocessor so to provide an instantaneous indication in flight of when the current in the pipeline is below a given reference value, so that prompt action can be taken to resolve the problem.

The output of the microprocessor 50 can be stored on magnetic tape or discs or other suitable storage means 52, so that the output can be reviewed and put in manually readable form when the helicopter lands. This could be done in the helicopter, too, but that is usually not necessary.

It may be desirable, however, to produce "soft" copy as by providing a CRT screen in the helicopter, so that any immediate problems can be seen and responded to promptly.

It is to be noted that, although three sensors, 20, 22 and 24 are illustrated, for the intended purpose of being able clearly to distinguish between two proximate, parallel pipelines, it is within the purview of this invention to reduce the number of sensors involved to two or even one. This reduction would affect the ability to differentiate between two proximate pipelines, but since this is sometimes not necessary, it may in those cases be desired.

In addition to the AC-magnetometer sensors, the helicopter is equipped with an altimeter, such as a commercial FMCW radar altimeter which is available from Collins Radio. The altimeter allows the elevation of the helicopter to be determined continuously with respect to the ground and with respect to the underlying pipeline so that the one can be subtracted from the other and a determination made of the ground cover between the pipeline and the surface of the ground. The ground cover is usually required by law to be at least ninety centimeters. However, weather conditions, erosion and other circumstances can reduce the amount of ground cover, and it is necessary to determine the cover in order to see if there is any problem.

The vertical dotted line 30 in Figure 1 symbolically represents the waveform sent out by the radar altimeter. The two dotted lines 32 and 34 in Figure 1 represent the waveforms sent out by the position indicator, which is a Doppler positioner, for the purpose of measuring the velocity of the aircraft with respect to the ground and locating the aircraft with respect to a reference, such as the beginning of the pipeline or the point at which measurement begins. Since pipelines are normally straight, and the aircraft is traversing a known linear path, the only knowledge which is required to be able to determine the position of the aircraft along the pipeline, once a starting point has been established, is a determination of the velocity of the aircraft at any given point in time. Time is simply measured by a clock which is part of the apparatus. However, other commercially available positioning systems, such as the Omega, Loran or Global Positioning System units, would be appropriate and usable in the apparatus of this invention.

The signal from the altimeter, clock and the position indicator are also fed into the microprocessor 50 (the feed-ins are not illustrated), so that the ultimate printout or reading not only provides a signal which is indicative of the current in the pipeline at any given point, but also identifies that point (in time and distance) and identifies the ground cover at that point.

The total package of equipment, including the sensors, booms, altimeter, Doppler positioner, and the other equipment schematically illustrated in Figure 2 only weighs approximately 130 kilograms in a commercial embodiment of the invention. It will therefore be appreciated that, although the type of equipment and therefore its weight can vary, the weight can reasonably easily be handled by a conventional commercial helicopter or other aircraft.

In the commercial use of cathodic currents to protect sub-surface pipelines, rectifiers are placed at uniform intervals along the pipelines for the purpose of maintaining a relatively constant (although it may vary substantially) current throughout the pipeline. The distances between rectifiers can vary from 300 meters apart to eighty kilometers apart, depending upon the soil resistivity (whether or not it is corrosive), size of the pipeline, quality of coating and other factors. The rectifier produces a current of one amp to one hundred amps, again depending upon the particular conditions of the soil, size of pipeline and quality of coating. In the use of prior art processes and apparatus, the current which was capable of being measured, which decreases substantially with distance from the rectifiers, can be measured at the distance most remote from to the nearest rectifiers (i.e. the center point between each pair of rectifiers) with relatively little accuracy as to the current measured and the distance measured. For example, prior art techniques are only able to measure within a range of 600 meters, and can only detect currents of 800 milliamps or greater. However, in the practice of this invention, currents as low as five milliamps can be measured, for a distance accuracy of approximately about three meters. This is to say that the process and apparatus of this invention can pinpoint any areas in which the current is below a pre-determined standard, which standard can be as low as five milliamps, within an accuracy of three meters, in comparison with prior art techniques, which can only measure within an accuracy of 600 meters and can only detect currents of 800 milliamps or more. As is apparent, the practice of the prior art, once a defective area has been ascertained, still requires a substantial amount of digging up pipeline cover, before it can be determined what portion of that 600 meters of pipeline in fact has the coating defect which has produced the corrosion which has caused the substantial current dropoff.

It is to be noted that, although pipelines are generally buried underground, they are required at times to traverse bodies of water, in which case they are typically located below the water surface at a level so as not to interfere with shipping or other aquatic uses in the area. Subsurface pipelines are capable, because of the way in which they are mounted, of being moved somewhat upstream or downstream as a result of current flow and other similar ambient conditions. It is, therefore, also important in the practice of this invention to be able to locate and determine the condition of currents flowing through pipeline sections which are located under water. The apparatus and process of this invention are able to serve that function. The process and apparatus of this invention allow the pipeline to be located, and the current characteristics in the pipeline to be determined, in the same manner as is the case with those portions of pipelines which are located underground. This also enables the underwater pipeline to be located by the identification of the magnetic field it creates which is measured by this invention. This is not at all possible (location of underwater pipe and measurement of protective current therein) with the available prior art techniques.

In the practice of the process of the invention, the necessary electrical equipment and the three booms, with sensors mounted on their ends, in the manner illustrated in Figure 1, was mounted on a Bell Jet Ranger II helicopter and flown along an underground pipeline at elevations which varied from fifteen to about thirty meters. In one example, 320 kilometers of pipeline were flown in a period of four hours, and the results of the magnetometer, altimeter and Doppler positioner measurements were recorded on magnetic tape. The magnetic tape was then returned to a laboratory site, at which time it was used to produce a graphic printout which illustrated the cathodic current continuously along the pipeline, in addition to representing the depth of ground cover. This then enabled the technician reading the output graph to determine precisely those areas of the pipeline in which the ground cover was less than required by law and those areas (within three meters) in which the cathodic current level was less than that pre-determined amount required to preserve the condition of the pipe. Those areas would be reported to the owner of the pipeline, and crews sent out to the pipeline to dig in the affected areas and expose the defective pipe coatings, so that they could be repaired, to forestall any further pipe deterioration due to coating degradation.

Since pipelines are required by law to be inspected visually at two week intervals, it will be appreciated that the process and apparatus of the invention can be used frequently for any given section of pipeline, and that the economies which are capable of being effected by being able accurately to measure rapidly the cathodic current condition of a given pipeline can easily justify the capital expenditures involved in the use of a helicopter and the equipment associated therewith which are necessary to the practice of the invention.

The process of the invention therefore involves, in broad outline, the following steps:

(a) Flying an aircraft with one or more AC-magnetometers above an underground pipeline at a speed and elevation which allows the magnetometers to be able accurately to sense and measure the magnetic field created by current in the pipeline;

(b) Detecting the magnetic field created by the current impressed that on pipeline;

(c) Filtering out extraneous signals other than those created by the magnet field of the pipeline, so that the effect of the earth's magnetic field or magnetic fields caused by other ambient conditions are not recorded;

(d) Detecting the linear position of the aircraft in time as the magnetometer is flown, so that the current reading which is measured by the magnetometer at any point in time can be related to a particular point along the length of the pipeline, thereby facilitating the ultimate determination of where pipeline coating problems are and further facilitating their correction; and

(e) Optionally, contemporaneously detecting the depth of ground cover along the pipeline; and

(f) Producing a discernible record of the magnitude of the magnetic field and, optionally, the depth of ground cover in relation to the linear position of the magnetometer with respect to the pipeline. This discernible record can be ephemeral, such as by viewing on a CRT, or can be permanent, as by providing a hard copy printout.

In one embodiment of the invention, a radar altimeter or similar device can be used in coordination with the magnetometer in order to determine the depth of ground cover at each point along the pipeline being surveyed.

Having thus described the invention, it will be apparent that various departures from the invention can be made without departing from the spirit and scope of the invention. The particular details of the AC-magnetometer, preamplifier, filter, amplifier, converter, microprocessor and related equipment will be readily determinable by a person having skill in the art to which the invention pertains, and it will be apparent that various departures can be made from the specific embodiment described without departing from the spirit or scope of the invention.

CLAIMS

1. A process for the detection and measurement of the corrosion protection DC current in an underground pipeline, comprising the steps of:

(a) Flying an aircraft bearing at least one AC-magnetometer above an underground pipeline;

(b) Detecting the magnetic field created by DC current impressed on said pipeline;

(c) Filtering out extraneous signals other than those created by the magnetic field of the pipeline;

(d) Detecting the linear position of the magnetometer with respect to a reference point along said pipeline; and

(e) Producing an ephemeral or storable record of the magnitude of the magnetic field in relation to the linear position of the magnetometer with respect to the pipeline.

2. A process as set forth in Claim 1, including the step of contemporaneously determining the depth of the ground cover at each point along the length of the pipeline being measured by the magnetometer.

3. A process as set forth in Claim 1 wherein three AC magnetometers are utilized and including the setp of detecting the x, y, and z axis components of the magnetic field created by said pipeline.

4. Apparatus for the detection and measurement of a corrosion protection DC current flowing in the wall of an underground pipe, comprising:

(a) At least one AC-magnetometer;

(b) Means adapted to mount said magnetometer on the exterior of an aircraft;

(c) Means to filter out signals sensed by said magnetometer or magnetometers other than those created by source of a predetermined magnitude; and

(d) Means for producing an ephemeral or stored signal corresponding to the magnitude of the magnetic field created by the pipeline at each point along its length.

5. Apparatus as set forth in Claim 4, including means for detecting the linear position of the magnetometer in time as the magnetometer is flown and correlating the position detected with the magnitude of the magnetometer signal measured in time.

6. Apparatus as set forth in Claim 4, including at least one non-ferrous boom mounting said magnetometer proximate its distal end and adapted to be mounted at its proximal end to the undercarriage of an aircraft.

7. Apparatus as set forth in Claim 6, including a plurality of said booms each mounting an AC-magnetometer, one being adapted to be mounted in alignment with the longitudinal axis of an aircraft and the other boom or booms adapted to be mounted in opposite directions transverse to that axis.

8. Apparatus as set forth in Claim 4, in which each magnetometer is capable of sensing and producing three signals corresponding to the x, y and z axis components of the magnetic field being detected.

9. Apparatus as set forth in Claim 5, including altimeter means for measuring the depth of ground cover above the pipeline being evaluated and means to correlate the depth of ground cover with the position of the aircraft with respect to said pipeline.

1/1

0052053

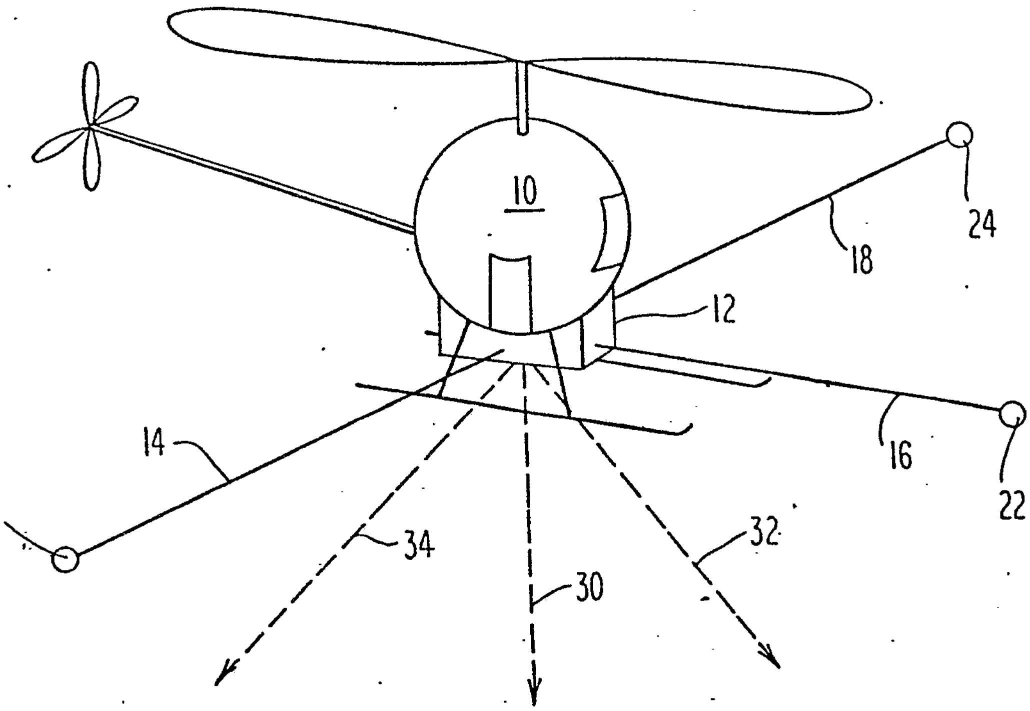


Fig. 1

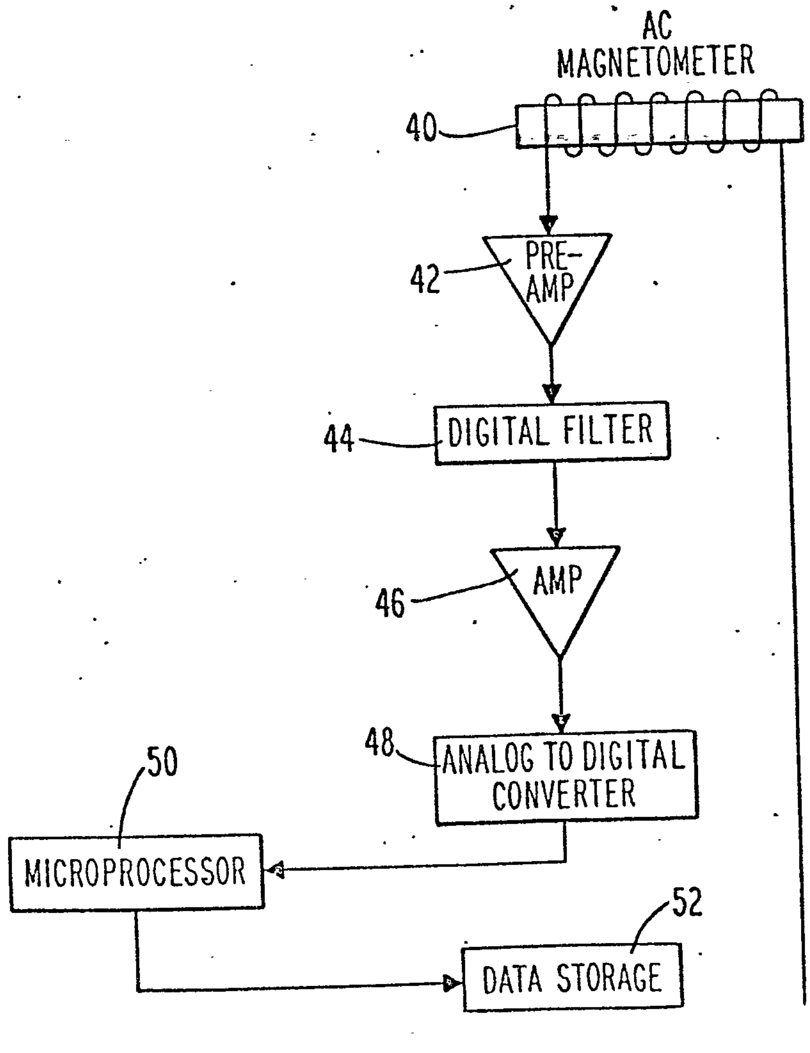


Fig. 2

European Patent Office

# EUROPEAN SEARCH REPORT

0052053
Application number

EP 81 40 1758.8

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | AU - B - 490 249 (BARRINGER RESEARCH LTD.)<br>* page 6, paragraph 2 to page 7, paragraph 2 *<br>-- | 1-4 | G 01 V 3/16<br>G 01 V 3/165 |
| D,A | US - A - 3 808 519 (COMMISSARIAT A L'ENERGIE ATOMIQUE)<br>* column 1, lines 4 to 31 *<br>-- | 1,3,4 | |
| D,A | US - A - 3 490 032 (GULF RESEARCH & DEVELOPMENT CO.)<br>* column 1, lines 22 to 36 *<br>-- | 1,5,6 | TECHNICAL FIELDS SEARCHED (Int.Cl. 3)<br>G 01 V 3/08<br>G 01 V 3/12<br>G 01 V 3/15<br>G 01 V 3/16<br>G 01 V 3/165<br>G 01 V 3/17 |
| A | US - A - 4 130 791 (TEXACO INC. et al.)<br>* summary *<br>---- | 2,3,8 | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 01-03-1982 | BOTTERILL |